# EUROPEAN PATENT APPLICATION

(11) **EP 2 056 182 A2**
(43) Date of publication of application: **06.05.2009**
(21) Application number: 08162566.7
(22) Date of filing: 19.08.2008
(51) Int. Cl.: G06F 1/26, G06F 1/32

(54) **Display apparatus and method**

(30) Priority: 02.11.2007 KR 20070111740
(71) Applicant: Samsung Electronics Co., Ltd., Suwon-si Gyeonggi-do (KR)
(72) Inventor: Kim, Seon-Seok 103, 209-63, Maetan 4-dong, Korea (KR); Lee, Sung-kyo 401-703, Geumhwa-maeul Jugong, Korea (KR); Kim, Tai-hung 651-902, Naru-maeul Bando Bora Wille, Korea (KR); Lee, Su-jin 202, 1246-1, Maetan 3-dong, Korea (KR)
(74) Representative: Grootscholten, Johannes A.M.

(57) **Abstract**

A display apparatus and method are provided. A first control unit of the display device controls operation of the display apparatus, receives image signals from the external device, and displays the image signals. A second control unit receives user commands input through an input unit which is mounted in the display apparatus, and receives the image signals from the external device. If an abnormal image signal is received from an external device, the first control unit enters power save mode, and the second control unit , enters stand-by mode. Accordingly, whether normal image signals are input can be determined using the second control unit which has entered power save mode, so that the display apparatus can reduce the amount of power consumed after the display apparatus goes into power save mode.

## Description

### CROSS-REFERENCE TO RELATED APPLICATIONS

This application claims priority from Korean Patent Application No. 10-2007-0111740, filed on November 2, 2007 in the Korean Intellectual Property Office, the disclosure of which is incorporated herein by reference in its entirety.

### BACKGROUND OF THE INVENTION

### 1. Field of the Invention

Apparatuses and methods consistent with the present invention relate to displaying images, and more particularly, to displaying images received from an external device.

### 2. Description of the Related Art

Monitors, which are a type of display apparatuses, are mainly used for displaying images received from devices such as a personal computer. When a monitor displays images while a user is not viewing the monitor, power is unnecessarily consumed.

To address this problem, a display power management signaling (DPMS) function was developed. The DPMS function is a function for making a monitor enter power save mode if the user does not make an input through a user input means, such as a keyboard or a mouse, for a certain period of time, by not displaying images on the monitor.

The monitor consumes less power in power save mode than in a normal mode since the monitor performs a minimum of functions. The minimum of functions are for receiving a control command regarding the DPMS function from the personal computer. Although the monitor operates in power save mode to minimize functions, a control element mounted in the monitor maintains a normal mode, and does not enter power save mode. Accordingly, the monitor continues to consume power while in power save mode.

In order to further reduce the power consumption of the monitor, there is a need for methods for reducing the amount of power consumed after the monitor goes into power save mode.

### SUMMARY OF THE INVENTION

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above.

An aspect of the present invention provides a display apparatus which is able to reduce the amount of power consumed after the display apparatus goes into power save mode, and a display method using the same.

According to an exemplary aspect of the present invention, there is provided a display apparatus which receives image signals from an external device, the display apparatus including a first control unit which controls operation of the display apparatus, receives image signals from the external device, and displays the image signals, and a second control unit which receives user commands input through an input unit which is mounted in the display apparatus, and receives the image signals from the external device, wherein the first control unit enters power save mode and the second control unit enters stand-by mode if an abnormal signal is received from the external device.

The stand-by mode may be a mode in which a command to control the first control unit to enter normal mode is transmitted to the first control unit if the image signal received from the external device is a normal signal.

The stand-by mode may be a mode in which a command to control the first control unit to enter normal mode is transmitted to the first control unit if it is sensed that the user command has been input through the input unit.

The input unit mounted in the display apparatus may sense the user command based on electric potential generated by user contact on the input unit.

The abnormal image signal may be an image signal that does not include at least one of a horizontal synchronization signal and a vertical synchronization signal.

The first control unit may communicate with the second control unit using the Inter-Integrated Circuit (IIC) communication protocol.

The display apparatus may be a monitor, and the external device may be a computer.

According to another exemplary aspect of the present invention, there is provided a display method of a display apparatus which includes a first control unit which receives image signals from the external device and displays the image signals, and a second control unit which receives user commands input through an input unit which is mounted in the display apparatus, and receives the image signals from the external device, the display method including receiving an abnormal signal from the external device, controlling the first control unit to enter power save mode if the abnormal signal is received from the external device, and controlling the second control unit to enter stand-by mode after the first control unit goes into the power save mode.

The stand-by mode may be a mode in which a command to control the first control unit to enter normal mode is transmitted to the first control unit if the image signal received from the external device is a normal signal.

The stand-by mode may be a mode in which a command to control the first control unit to enter normal mode is transmitted to the first control unit if it is sensed that the user command is received through the input unit.

The input unit mounted in the display apparatus may sense the user command based on electric potential generated by user contact on the input unit.

The abnormal image signal may be an image signal not including at least one of a horizontal synchronization signal and a vertical synchronization signal.

### BRIEF DESCRIPTION OF THE DRAWINGS

The above and/or other exemplary aspects of the present invention will be more apparent by describing certain exemplary embodiments of the present invention with reference to the accompanying drawings, in which:

FIG. 1 is a schematic block diagram of a monitor according to an exemplary embodiment of the present invention; and

FIG. 2 is a flowchart of a display method according to an exemplary embodiment of the present invention.

### DETAILED DESCRIPTION OF EXEMPLARY EMBODIMENTS OF THE INVENTION

Certain exemplary embodiments of the present invention will now be described in greater detail with reference to the accompanying drawings.

In the following description, like drawing reference numerals are used for like elements, even in different drawings. The matters defined in the description, such as detailed construction and elements, are provided to assist in a comprehensive understanding of the invention. However, the present invention can be practiced without those specifically defined matters. Also, well-known functions or constructions are not described in detail since they would obscure the invention with unnecessary detail.

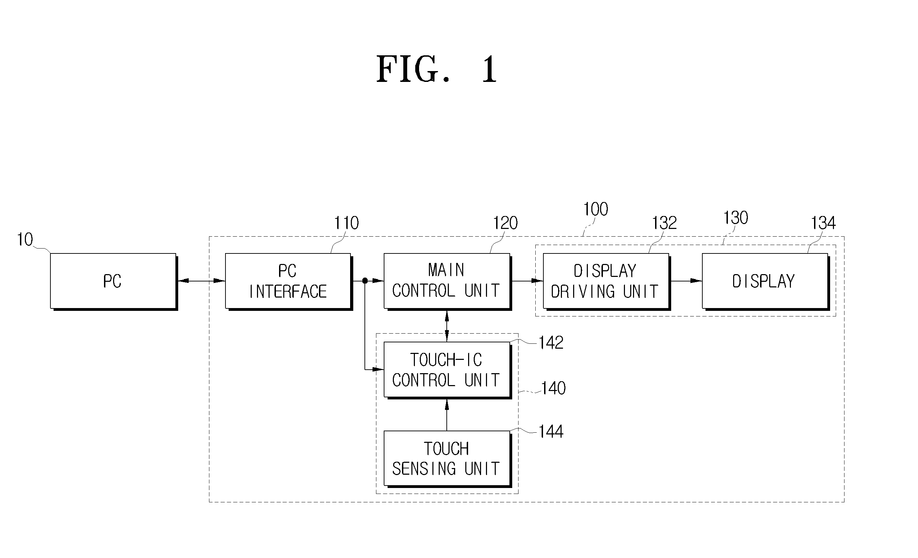

FIG. 1 is a schematic block diagram of a monitor 100 according to an exemplary embodiment of the present invention. The monitor 100 is a display apparatus which outputs images received from a personal computer (PC) 10. The PC 10 in has a display power management signaling (DPMS) function, for controlling the monitor 100 to reduce power consumption of the monitor 100.

As shown in FIG. 1, the monitor 100 according to an exemplary embodiment of the present invention includes a PC interface 110, a main control unit 120, a display panel 130, and a touch integrated circuit (IC) 140.

The PC interface 110 is connected to the PC 10 by D-Sub or digital video interface (DVI) communication protocols, so that the monitor 100 can receive images from the PC 10 through the PC interface 110.

The main control unit 120 performs scaling of the images received from the PC 10 through the PC interface 110 so that the images can have a resolution suitable for the resolution of a display 134. That is, the main control unit 120 includes a scaler (not shown) for performing scaling.

The display panel 130 includes a display driving unit 132 and the display 134. The display driving unit 132 displays the images scaled by the main control unit 120 on the display 134. Accordingly, the display 134 displays the images which have been received from the PC 10 through the PC interface 110 and scaled by the main control unit 120.

The touch-IC 140 includes a touch-IC control unit 142 and a touch sensing unit 144. The touch sensing unit 144 is an element for receiving user commands input by touch.

The touch-IC control unit 142 determines the type of user command input through the touch sensing unit 144. In greater detail, if the touch sensing unit 144 senses the position of a contact point which the user touches in a contactable area, the touch-IC control unit 142 determines the position of the contact point and recognizes a user command corresponding to the determined position, so the type of user commands can thereby be determined.

The touch-IC control unit 142 transmits the determined user command to the main control unit 120. The touch-IC control unit 142 and the main control unit 120 are connected according to the Inter-Integrated Circuit (IIC) communication protocol.

The main control unit 120 controls the overall operation of the monitor 100 as well as performing scaling of images received from the PC 10 through the PC interface 110. In particular, if an image signal received from the PC 10 through the PC interface 110 is abnormal, the main control unit 120 controls the monitor 100 to go into the power save mode.

In the power save mode, images are not output on the display 134 of the monitor 100. In order for the monitor 100 to go into power save mode, the main control unit 120 and the display panel 130 go into the power save mode and perform only a minimum of functions, for example a function for receiving commands or requests from an external element.

If an image signal received from the PC 10 is abnormal, the image signal received from the PC 10 through the PC interface 110 does not include at least one of a horizontal synchronization (Hsync) signal and a vertical synchronization (Vsync) signal. That is, the PC 10 does not transmit at least one of a horizontal synchronization signal and a vertical synchronization signal to the monitor 100.

If an image signal received from the PC 100 through the PC interface 110 is abnormal, the touch-IC control unit 142 goes into a stand-by mode. In the stand-by mode, if normal image signals start being received from the PC 10, the touch-IC control unit 142 requests that the main control unit 120 should be converted into normal mode.

In stand-by mode, the touch-IC control unit 142 determines 1) whether normal image signals are received from the PC 10 through the PC interface 110 or 2) whether the user inputs user commands by touching the touch sensing unit 144. The normal image signal is an image signal including both an Hsync signal and a Vsync signal.

The touch-IC control unit 142 can receive image signals from the PC 10 through the PC interface 110. An Hsync signal and a Vsync signal in the received image signal each have an electric potential. Accordingly, in the stand-by mode, the touch-IC control unit 142 can sense the electric potential, and so can determine whether an image signal including an Hsync signal and a Vsync signal is received from the PC 10 through the PC interface 110 by sensing the electric potential of the Hsync and Vsync signals.

If the user touches the touch sensing unit 144, static electricity is generated in the touch sensing unit 144. The static electricity also has electric potential. Therefore, in stand-by mode, the touch-IC control unit 142 can sense the electric potential, and so determine whether or not the user inputs a user command by touching the touch sensing unit 133.

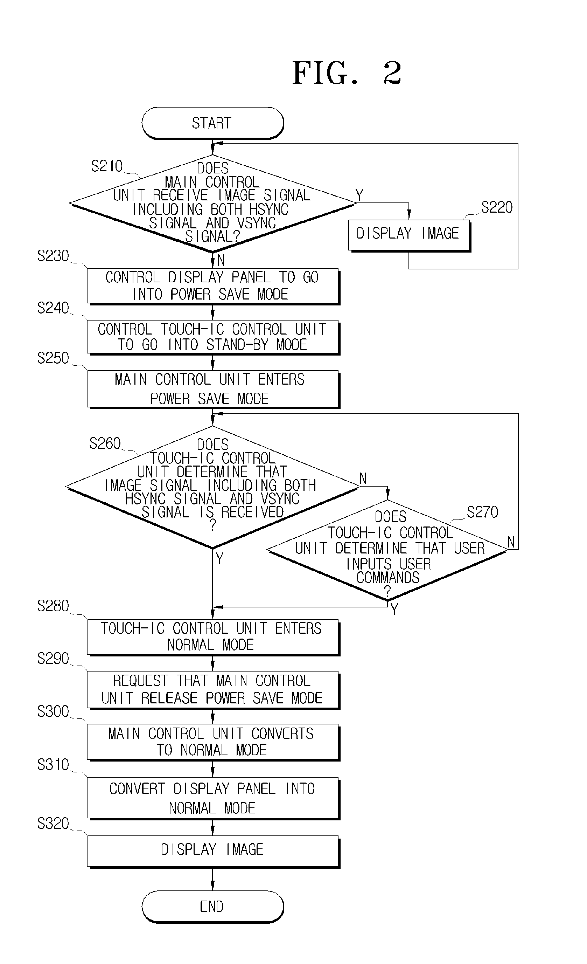

Hereinafter, a process of the monitor 100 going into the power save mode and coming out of the power save mode is described in detail with reference to FIG. 2, which shows a flowchart of a displaying method according to an exemplary embodiment of the present invention.

In FIG. 2, if the main control unit 120 receives an image signal including both an Hsync signal and a Vsync signal from the PC 10 through the PC interface 110 (S210-Y), the monitor 100 displays the received image signal (S220).

However, if the main control unit 120 receives an image signal that does not include both an Hsync signal and a Vsync signal from the PC 10 through the PC interface 110 (S210-N), the main control unit 120 controls the display panel 130 to go into the power save mode (S230). In other words, in operation S230, the main control unit 120 controls the display panel 130 to perform a minimum of functions.

Subsequently, the main control unit 120 commands the touch-IC control unit 142 to go into the stand-by mode (S240). Accordingly, the touch-IC control unit 142 goes into the stand-by mode. In addition, the main control unit 120 goes into the power save mode (S250).

If the touch-IC control unit 142 goes into the stand-by mode, the touch-IC control unit 142 performs operations S260 and S270. That is, in stand-by mode, the touch-IC control unit 142 determines 1) whether an image signal including both an Hsync signal and a Vsync signal is received from the PC 10 through the PC interface 110 (S260), and, if both an Hsync signal and a Vsync signal are not included in the image signal received from the PC 10 through the PC interface 110 (S260-N), the touch-IC control unit determines 2) whether the user inputs user commands through the touch sensing unit 144 (S270).

If an image signal including both an Hsync signal and a Vsync signal is received from the PC 10 through the PC interface 110 (S260-Y), or if the user inputs user commands through the touch sensing unit 144 (S270-Y), the touch-IC control unit 142 enters normal mode (S280) and requests that the main control unit 120 should exit the power save mode (S290). In operation S290, this request can be done in the IIC communication protocol between the touch-IC control unit 142 and the main control unit 120.

The main control unit 120, which receives the request to exit the power save mode from the touch-IC control unit 142, converts the normal mode (S300), and also controls the display panel 130 to convert from the power save mode to the normal mode (S310). Consequently, images received from the PC 10 through the PC interface 110 are scaled by the main control unit 120 and output through the display panel 130 (S320).

Until now, a process of the monitor 100 of FIG. 1 going into the power save mode and going out of the power save mode has been described in detail according to an exemplary embodiment of the present invention.

In the exemplary embodiment of the present invention, if the monitor 100 receives a normal image signal from the PC 10, 1) the touch-IC control unit 142 requests that the main control unit 120 should exit the power save mode, and then 2) the main control unit 120 controls the monitor 100 to exit the power save mode. However, this is merely an example for convenience in description. In a situation in which the monitor 100 must exit the power save mode, it is also possible for the touch-IC control unit 142 to directly control the monitor 10 to exit the power save mode.

In the exemplary embodiment of the present invention, in the power save mode, the touch-IC control unit 142, which can sense user commands, is implemented to determine whether a normal image signal is received from the PC 10. However, in stand-by mode, an element for performing another function instead of a function for sensing user commands can also be implemented to determine whether a normal image signal is received from the PC 10.

In addition, in the exemplary embodiment of the present invention, the main control unit 120 and the touch-IC control unit 142 are connected according to the IIC communication protocol. The technical idea of the present invention can also be applied when the main control unit 120 and the touch-IC control unit 142 are connected according to other communication protocols.

Furthermore, the monitor 100 according to the exemplary embodiment of the present invention is merely an example of a display apparatus. The technical idea of the present invention can also be applied to other kinds of display apparatuses.

Moreover, in the exemplary embodiment of the present invention, the monitor outputs images received from the PC. The technical idea of the present invention can also be applied when the monitor outputs images received from devices other than a PC.

As can be appreciated from the above description, when a display apparatus goes into the power save mode, whether normal image signals are input can be determined using a control element which has entered a stand-by mode. Accordingly, the display apparatus can reduce the amount of power consumed after the display apparatus goes into the power save mode.

The foregoing exemplary embodiments are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A display apparatus which receives image signals from an external device, the display apparatus comprising:
a first control unit which controls operation of the display apparatus, receives image signals from the external device, and controls a display to display the image signals; and
a second control unit which receives a user command, and receives the image signals from the external device,
wherein the first control unit enters a power save mode and the second control unit enters a stand-by mode if an abnormal image signal is received from the external device.

2. The display apparatus according to claim 1, wherein in the stand-by mode, the second control unit controls the first control unit to enter a normal mode if the image signal received from the external device is a normal signal.

3. The display apparatus according to claim 1 or 2, wherein in the stand-by mode, the second control unit controls the first control unit to enter a normal mode if the user command is input.

4. The display apparatus according to claim 3, further comprising a user input mounted in the display apparatus, through which the user command is input, and which senses the user command based on electric potential generated by user contact on the input unit.

5. The display apparatus according to any one of claims 1 to 4, wherein the abnormal image signal is an image signal that does not include at least one of a horizontal synchronization signal and a vertical synchronization signal.

6. The display apparatus according to any one of claims 1 to 5, wherein the first control unit communicates with the second control unit according to the Inter-Integrated Circuit communication protocol.

7. The display apparatus according to any one of claims 1 to 6, wherein the display apparatus is a monitor, and the external device is a computer.

8. A display method of a display apparatus which comprises a first control unit which receives image signals from an external device and controls a display to display the image signals, and a second control unit which receives user commands, and receives the image signals from the external device, the display method comprising:
receiving an image signal from the external device;
entering the first control unit into a power save mode if the image signal received from the external device is abnormal; and
entering a second control unit into a stand-by mode if the first control unit goes into the power save mode.

9. The display method according to claim 8, further comprising
transmitting a command, from the second control unit to the first control unit, to control the first control unit to enter a normal mode if the image signal received from the external device is not abnormal.

10. The display method according to claim 8 or 9, further comprising
receiving a user command through the input unit;
transmitting a command from the second control unit to the first control unit, thus controlling the first control unit to enter a normal mode in response to receiving the user command.

11. The display method according to claim 10, wherein the receiving the user command comprises sensing the user command based on electric potential generated by user contact with an input unit.

12. The display method according to any one of claims 8 to 11, wherein the image signal is abnormal if the image signal does not include at least one of a horizontal synchronization signal and a vertical synchronization signal.
